# EUROPEAN PATENT APPLICATION

(11) **EP 3 040 175 A1**
(43) Date of publication of application: **06.07.2016**
(21) Application number: 14839723.5
(22) Date of filing: 29.08.2014
(51) Int. Cl.: B29C 39/10

(54) **METHOD FOR PRODUCING SHEET PIECES**

(30) Priority: 29.08.2013 ES 201331282
(71) Applicant: Simplicity Works Europe S.L., 03205 Elche (Alicante) (ES)
(72) Inventor: HERNÁNDEZ HERNÁNDEZ, Adrian, E-03670 Monforte del Cid (Alicante) (ES)
(74) Representative: Carvajal y Urquijo, Isabel
(86) International application number: PCT/ES2014/070673
(87) International publication number: WO 2015/028696

(57) **Abstract**

The invention relates to a method for producing sheet pieces, comprising: preparing innumerable groups (1) of strands or bristles; fixing said groups to a carrier base (2); shaping a sheet piece (5) in a mold (4) using a plastic material in a viscous state; introducing the groups of bristles or strands, by the divergent end thereof, into the sheet piece (5) while it is in a viscous state; curing the plastic material; and cutting the pieces or strands in a direction parallel to the surface of the sheet piece.

## Description

### Field of the Invention

The present invention relates to a method for producing sheet pieces, provided with strands projecting from one of the surfaces thereof to simulate natural skin.

The sheet pieces will be obtained in molds from plastic materials, such pieces being able to be in the form of flat or shaped sheets.

The method of the invention allows obtaining sheet pieces in a simple and cost-effective manner that have a structure similar to that of natural skin, provided with hair on one of the surfaces thereof, both the sheet piece and the strands simulating hair being able to be of different types and being able to have different appearances and/or finishes.

### Background of the Invention

Different systems for manufacturing artificial skin are already known, whereby obtaining sheet pieces having smooth surfaces which can have certain markings simulating natural skin on at least one of its surfaces.

As a background to sheet pieces with strands projecting from one of the surfaces thereof simulating hair, reference can be made to the production of wigs from a helmet-shaped flexible sheet piece in which strands are fixed by means of complicated and expensive insertion systems.

The production of pieces carrying strands in the form of brushes is also known, in which holes are made on a rigid base, from one of the surfaces thereof, into which groups of bristles or strands are inserted and fixed, which groups of bristles or strands form a dense mass of bristles or strands as they diverge from one another at the free end thereof.
However, none of the different aforementioned systems allows obtaining a preferably flexible sheet piece simulating a natural skin with hair".

### Description of the Invention

The object of the present invention is a method for producing preferably flexible sheet pieces carrying strands of any type or nature on one of the surfaces thereof, whereby the sheet piece gives an appearance similar to that of natural skin with hair.

Preferably the sheet piece will be obtained from plastic materials by means of molds reproducing the structure of the piece to be obtained, whether in the form of a flat sheet or band or a shaped piece.

The strands can have different natures and sections, depending on the appearance to be obtained, all of them preferably going in the same direction, i.e., perpendicular to the surface of the starting sheet piece, or having a certain inclination with respect thereto.

According to the invention, the method starts with the preparation of innumerable groups of strands having the desired features that are attached and compressed together at one of the ends thereof, for example by means of tying, whereas at the opposite end they are free, such that they progressively diverge towards said free end.

Then the groups of strands are fixed, from the side or end in which said strands are attached and compressed together, to a carrier base, at equidistant positions and with maximum separations equal to the maximum diameter of the groups. A dense mass, with a virtually uniform distribution of bristles or strands, is thereby obtained at the free end of the strands.

In addition, the sheet piece is shaped from a plastic material that is kept in a viscous state in a mold. In this state, the support base is positioned on the sheet piece while it is in a viscous state, with the strands facing said sheet piece at the free end thereof, pressing and partially introducing the strands of the support base into the sheet piece to then cure the mass shaping the sheet piece, until achieving the fixing of the strands to the cured sheet piece.

Finally, the strands are cut at a distance from the sheet piece in which said strands project from the sheet piece in considerably parallel directions and with uniform distribution, thereby obtaining a generally flexible sheet piece, from one of the surfaces of which there project, with uniform distribution and with the desired length, the fibers or strands shaping the groups fixed to the carrier base.

The groups of strands will preferably be fixed to the carrier base separated from one another by a distance that will be comprised between the maximum and minimum diameters of said groups. The strands will thereby occupy a compact and uniform distribution at the free end, without separations between same.

The strands of all the groups of fiber will also preferably have the same length, such that the free end of the strands of all the groups fixed to the carrier base are located on the same plane.

Once the fibers or strands are fixed to the sheet piece, cutting thereof will be performed in a direction parallel to the surface of said piece.

The positioning of the support base with the groups of strands on the sheet piece while it is in a viscous state can be done such that said strands hit the sheet piece in the perpendicular direction or with a certain inclination with respect thereto, depending on the appearance to be obtained.

Through holes having a reduced diameter and located between the strands can be made on the sheet piece obtained with the described method, which through holes will simulate the pores of natural skin.

The composition of the groups of strands or bristles that are fixed to the carrier base, in relation to both number and composition, will depend on the features to be obtained, in relation to both the density and the diameter and nature of the strands. Thus, for example, the strands or bristles can be of a resistant material and/or a repellant material that repels given external agents and products, so said strands or bristles will remain in perfect conditions, even in adverse situations, and furthermore cleaning said strands or bristles is made easier.

### Brief Description of the Drawings

The different phases of the method of the invention are schematically depicted in the attached drawings by way of non-limiting example.
Figure 1 shows a section view of the positioning of the carrier base of groups of bristles on the mass while it is in a viscous state, which will constitute the sheet piece.
Figure 2 shows a section view of the phase of fixing the bristles or strands in the mass while it is in a viscous state, which will constitute the sheet piece.
Figure 3 shows a section view of the beginning of the operation for cutting the strands or fibers.
Figure 4 shows a section view of the sheet piece obtained with the strands projecting from one of the surfaces thereof.
Figure 5 shows an enlarged perspective view of the portion of the sheet piece of Figure 4.

### Detailed Description of an Embodiment

The method of the invention starts by fixing a series of groups of bristles (1) into a generally rigid carrier base (2).

To that end, the strands shaping each group (1) are attached and compressed at one of the ends thereof, which are introduced for example into holes made in the carrier base (2).

The different groups (1) of bristles are arranged with uniform separations, such that a compact and uniform distribution is obtained at the free end (3) of the strands.

In addition, the mass (5) shaping the sheet piece is arranged on a mold (4) in a molten or viscous state, which may adopt the shape of a flat sheet or band, or it may adopt the form of a piece with a given shape.

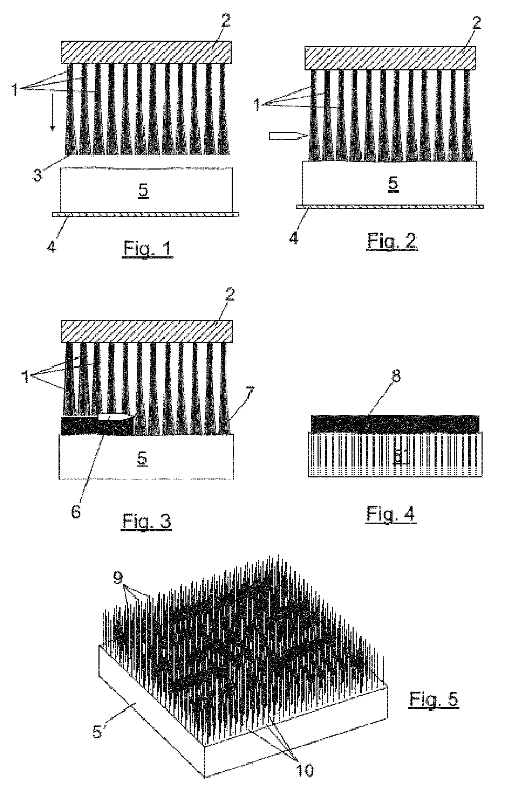

Then, and as shown in Figure 2, the groups (1) of strands are introduced by the free end (3) thereof into the mass (5) while it is in a viscous state, the mass (5) then being cured, such that the strands are strongly fixed thereto. Then, and as shown in Figure 3, the strands of the groups (1) are cut or sheared by means of a blade or guillotine (6) in a direction parallel to the surface (7) of the cured sheet piece (5), a preferably flexible sheet piece (5') finally being obtained from one of which surfaces there project parallel strands (8) with a uniform distribution, which strands (8) can be oriented in the direction perpendicular to the surface of the piece (5') or with a certain inclination with respect to same.

As seen in Figure 5, small perforations (9) simulating the pores of natural skin can be made between the strands (9) projecting from the sheet piece (5).

Sheet pieces provided on one of the surfaces thereof with strands or bristles, the density, diameter and nature of which will depend on the appearance to be obtained, can be obtained in a simple manner with the described method.

In the example depicted in the drawings, the fibers (9) project from the surface of the sheet piece (5') in the direction perpendicular thereto. However, sheet pieces could be obtained with the method of the invention in which the fibers or bristles have a certain inclination with respect to the surface of the piece (5'), all by simply introducing in the operations of Figures 1 and 2 the groups (1) of bristles with the desired inclination in the mass of the piece (5) while it is in a viscous state.

The sheet piece obtained with the method of the invention can be used directly for producing different articles, for which purpose the strands or bristles (9) can be made from a material that is resistant to certain products and which can be readily cleaned.

The sheet piece obtained with the method of the invention can also be used as a base or mold for shaping, on the side from which the strands or bristles (9) project, a second sheet piece which strands or bristles go through and which by means of the extraction thereof, separating the two sheet pieces, a second shaped sheet piece would be obtained with innumerable pores made by the extraction of the strands or bristles (9).

## Claims

1. A method for producing sheet pieces, particularly sheet pieces obtained from plastic materials, **characterized in that** it comprises:
- Preparing innumerable groups of strands or bristles, attached by one of their ends and with a divergent and uniform distribution at the opposite end;
- Fixing said groups, from the side on which the strands or bristles are attached, to a carrier base, at equidistant positions and with maximum separations equal to the maximum diameter of the groups;
- Shaping the sheet piece in a mold, in which the plastic material is kept in a viscous state;
- Positioning the support base on the sheet piece while it is in a viscous state, with the strands facing said sheet piece;
- Partially introducing the strands or bristles of the support base into the sheet piece while it is in a viscous state;
- Curing the sheet piece until achieving the fixing of the strands or bristles thereto;
- Cutting the strands in a direction parallel to the surface of the cured sheet piece from which said strands project.

2. The method according to claim 1, **characterized in that** through holes located between the strands or bristles are made in the sheet piece.
